Europäisches Patentamt

(19) European Patent Office

Office européen des brevets

(11) Numéro de publication : **0 326 481 B1**

(12) **FASCICULE DE BREVET EUROPEEN**

(45) Date de publication du fascicule du brevet :
17.04.91 Bulletin 91/16

(51) Int. Cl.⁵ : **F16B 37/02**

(21) Numéro de dépôt : **89400196.5**

(22) Date de dépôt : **24.01.89**

(54) Ecrou en forme de pince et assemblage réalisé à l'aide de cet écrou.

(30) Priorité : **27.01.88 FR 8800946**

(43) Date de publication de la demande :
**02.08.89 Bulletin 89/31**

(45) Mention de la délivrance du brevet :
**17.04.91 Bulletin 91/16**

(84) Etats contractants désignés :
**AT BE CH DE ES GB GR IT LI LU NL SE**

(56) Documents cités :
**DE-A- 1 575 087**
**DE-A- 2 232 385**
**GB-A- 538 540**
**US-A- 2 101 287**
**US-A- 3 704 739**

(73) Titulaire : **RAPID S.A.**
**251 Boulevard Péreire**
**F-75852 Paris Cédex 17 (FR)**

(72) Inventeur : **Dubost, Dominique**
**53 Résidence Elysées II**
**F-78170 la Celle Saint Cloud (FR)**

(74) Mandataire : **Durand, Yves Armand Louis et al**
**CABINET WEINSTEIN 20, Avenue de**
**Friedland**
**F-75008 Paris (FR)**

Description

La présente invention a essentiellement pour objet un écrou en forme de pince destiné à être monté sur le bord d'un panneau ou analogue auquel doit être fixé un autre panneau ou une autre pièce.

Elle vise également un assemblage de pièces réalisé à l'aide de cet écrou.

On connait d'après le document US-A-2.101.287 un écrou en forme de pince élastique présentant la forme générale d'un U dont l'une des branches comprend une ouverture avec laquelle peut venir en prise un élément fileté tel qu'une vis, et dont l'autre branche comporte un trou laissant le libre passage à la vis et formant un fût faisant saillie vers l'intérieur du U. Dès lors la vis traverse l'écrou de part en part ainsi qu'un orifice ménagé dans le panneau, ce qui permet de fixer sur ce panneau un ou plusieurs autres panneaux ou pièces quelconques.

Or, lorsque l'orifice dans le panneau est un orifice débouchant, c'est-à-dire constitue une encoche, ce qui est fréquemment le cas dans les panneaux en matière synthétique, il est indispensable que l'écrou comporte d'une part des moyens de centrage et de guidage vis-à-vis de l'encoche pour permettre un montage facile et rapide de l'écrou sur le bord du panneau, et d'autre part des moyens d'accrochage qui ne gênent pas le montage de l'écrou dans l'encoche et qui assurent, en fin de montage, un bon accrochage de l'écrou, sans pour cela empêcher son démontage lorsqu'on le désire.

Mais, jusqu'à présent, il n'a été proposé aucun écrou en pince susceptible d'atteindre les buts ci-dessus, et c'est pourquoi la présente invention se propose de combler cette lacune.

A cet effet, l'invention a pour objet un écrou en forme de pince destiné à être monté sur le bord d'un panneau ou analogue comportant un orifice débouchant en forme d'encoche que peut traverser un élément fileté vissé dans l'écrou, et du type présentant la forme générale d'un U dont l'une des branches comprend une ouverture avec laquelle peut venir en prise l'élément fileté et dont l'autre branche comporte un trou laissant le libre passage à cet élément fileté, ladite ouverture ou ledit trou formant un fût faisant saillie vers l'intérieur du U et servant de moyen de guidage de l'écrou dans l'encoche du panneau, tandis que l'extrémité libre de l'une et/ou l'autre branche du U comporte une languette ou analogue faisant saillie vers l'intérieur du U et située, de même que le fût, sur sensiblement l'axe longitudinal médian de l'écrou pour pouvoir ainsi s'accrocher sur le panneau après passage de la languette et du fût dans l'encoche de ce panneau.

On comprend donc que la disposition du fût et de la languette est telle que l'introduction de l'écrou sur le bord du panneau n'est pas gênée par la languette qui passe dans l'encoche coopérant avec le fût permettant le centrage et le guidage de l'écrou lors de sa mise en place.

Suivant un mode de réalisation préféré, l'ouverture précitée comporte une empreinte ou analogue formant taraudage, tandis que le trou précité dans l'autre branche de l'écrou forme un fût, et que la languette précitée est découpée dans l'extrémité libre de la branche comportant ladite ouverture ou empreinte.

On précisera encore ici que l'extrémité libre de la branche du U de l'écrou dans laquelle est découpée la languette est repliée vers l'extérieur du U, ce qui facilite l'introduction de l'écrou sur le bord du panneau.

Mais d'autres avantages et caractéristiques de l'invention apparaîtront mieux dans la description détaillée qui suit et se réfère aux dessins annexés, donnés uniquement à titre d'exemple, et dans lesquels :

La figure 1 est une vue en perspective d'un écrou en pince conforme à l'invention ; et

La figure 2 est encore une vue en perspective de cet écrou, mais monté sur le bord d'un panneau comportant une encoche.

Suivant l'exemple de réalisation représenté, un écrou en pince conforme à cette invention présente la forme générale d'un U dont l'une 1 des branches reliée à l'autre branche 2 par une partie en forme d'anse 3 comprend une empreinte 4 formant taraudage susceptible de venir en prise avec le filetage d'une vis (non représentée) et dont l'autre branche 2 comporte un trou 5 laissant le libre passage à la vis et bordé de façon à réaliser un fût 6 qui fait saillie vers l'intérieur du U formé par les deux branches 1 et 2.

Dans l'extrémité libre 1a de la branche 1 est découpée une languette 7 faisant saillie elle aussi, comme le fût 6, vers l'intérieur du U de l'écrou. On remarquera que l'extrémité libre 1a de la branche 1 est légèrement repliée vers l'extérieur pour faciliter l'insertion de l'écrou sur le bord 8 d'un panneau P, comme on le décrira en détail plus loin.

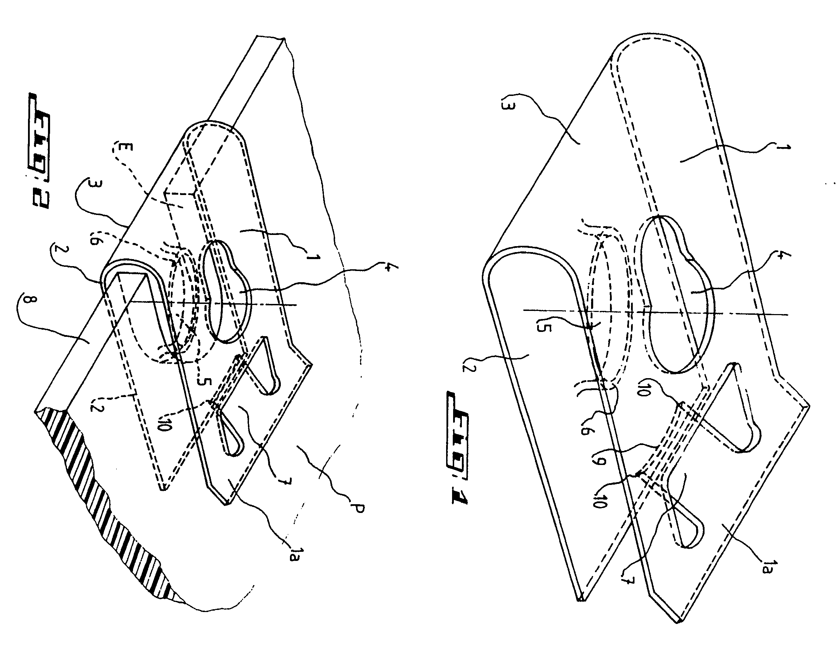

Comme on le voit sur la figure 1, l'extrémité libre de la languette 7 peut constituer un bord arqué 9 de façon à réaliser deux pointes ou griffes 10 pouvant s'accrocher sur le panneau P.

Le fût 6 et la languette 7 sont situés sensiblement sur l'axe longitudinal médian de l'écrou pour ainsi permettre un montage facile et rapide de l'écrou sur le bord 8 du panneau P.

Le fût 6 pourrait très bien, sans sortir du cadre de l'invention, constituer un prolongement de l'ouverture ou empreinte 4 ménagée dans la branche 1 de l'écrou. Ainsi, le fût 6, faisant saillie vers l'intérieur du U de l'écrou pourrait être intérieurement taraudé pour recevoir la vis.

Egalement, la languette 7 pourrait être prévue à l'extrémité libre de la branche 2 de l'écrou, cette languette pouvant également être prévue à l'extrémité libre des deux branches 1 et 2, si on le désire.

Il faut également dire que, dans l'exemple de la réalisation illustré sur la figure 1, l'ouverture 4 pourrait être constituée par autre chose qu'une déformation ou empreinte, c'est-à-dire par exemple, par deux languettes en vis-à-vis susceptibles de coopérer avec le filetage de la vis.

En se reportant à la figure 2, on comprend que l'écrou en pince qui vient d'être décrit peut être monté rapidement et correctement sur le panneau P, qui peut être en matière synthétique, et qui comporte une encoche E.

Plus précisément, lors de l'insertion de l'écrou, la languette 7 ne procurera aucune résistance, puisqu'elle passera dans l'encoche 2 en guidant éventuellement l'écrou, puis le fût 6 passera à son tour dans l'encoche E, lequel fût permet évidemment le centrage et le guidage de l'écrou. En fin d'insertion, la languette élastique 7 viendra s'accrocher sur la surface du panneau P, c'est-à-dire sur la partie du panneau P qui constitue en quelque sorte le fond de l'encoche E. Ainsi, l'écrou sera fermement maintenu sur ce panneau, et, pour le démonter, il suffira d'exercer une pression sur la branche 1 de l'écrou, et cela ne procurera aucune détérioration du panneau P.

On a donc réalisé suivant l'invention un écrou en pince qui peut être monté et démonté facilement et sans effort sur le bord d'un panneau comportant des encoches, étant entendu qu'en position montée un tel écrou présente toutes les qualités requises de solidité pour permettre la fixation de pièces diverses sur le panneau P.

**Revendications**

1. Ecrou en forme de pince destiné à être monté sur le bord d'un panneau ou analogue (P) comportant un orifice débouchant en forme d'encoche (E) que peut traverser un élément fileté vissé dans l'écrou, et du type présentant la forme générale d'un U dont l'une (1) des branches comprend une ouverture (4) avec laquelle peut venir en prise l'élément fileté et dont l'autre branche (2) comporte un trou (5) laissant le libre passage à cet élément fileté, ladite ouverture (4) ou ledit trou (5) formant un fût (6) faisant saillie vers l'intérieur du U et servant de moyen de guidage de l'écrou dans l'encoche (E) du panneau, tandis que l'extrémité libre de l'une et/ou l'autre branche du U comporte une languette ou analogue (7) faisant saillie vers l'intérieur du U et située, de même que le fût (6), sur sensiblement l'axe longitudinal médian de l'écrou pour pouvoir ainsi s'accrocher sur le panneau (P) après passage de la languette (7) et du fût (6) dans l'encoche (E) de ce panneau.

2. Ecrou selon la revendication 1, caractérisé en ce que l'ouverture précitée (4) comporte une empreinte ou analogue formant taraudage, tandis que le trou (5) précité forme un fût (6) et que la languette (7) précitée est découpée dans l'extrémité libre (1a) de la branche (1) comportant ladite ouverture ou empreinte (4).

3. Ecrou selon la revendication 1 ou 2, caractérisé en ce que l'extrémité libre (1a) de la branche (1) du U dans laquelle est découpée la languette (7) est repliée vers l'extérieur du U.

4. Assemblage de pièces dont l'une au moins comporte un ou plusieurs orifices débouchants formant encoches, caractérisé en ce qu'il est réalisé à l'aide d'un ou plusieurs écrous selon l'une des revendications 1 à 3.

**Ansprüche**

1. Zum Aufsetzen auf den Rand einer Tafel oder dergleichen (P) bestimmte, klammerartige Mutter mit einer ausmündenden, kerbenförmigen Aussparung (E), welche durch ein in die Mutter eingeschraubtes Gewindeelement durchsetzbar ist und der die allgemeine U-förmige Gestalt aufweisenden Gattung, dessen einer Schenkel (1) eine Oeffnung (4) umfasst, mit welcher das Gewindeelement in Eingriff kommen kann und dessen anderer Schenkel (2) ein den freien Durchgang für dieses Gewindeelement lassendes Loch (5) aufweist, wobei die besagte Oeffnung (4) oder das besagte Loch (5) einen nach Innen des U's vorstehenden und als Mittel zur Führung der Mutter in der Kerbe (E) der Tafel dienenden Schaft (6) bildet, während das freie Ende des einen und/oder des anderen Schenkels des U's eine nach Innen des U's vorstehende Zunge oder dergleichen (7) aufweist, welche, sowie der Schaft (6) etwa auf der Längsmittellinie der Mutter liegt, um somit nach Einführung der Zunge (7) und des Schaftes (6) in die Kerbe (E) dieser Tafel sich an die Taffel (P) anhaken zu können.

2. Mutter gemäss Anspruch 1, dadurch gekennzeichnet, dass die vorgenannte Oeffnung (4) eine ein Innengewinde bildende Vertiefung oder dergleichen aufweist, während das vorgenannte Loch (5) einen Schaft (6) bildet und die vorgenannte Zunge (7) in dem freien Ende (1) des die besagte Oeffnung bzw. Vertiefung (4) aufweisenden Schenkels (1) ausgeschnitten ist.

3. Mutter nach Anspruch 1 oder 2, dadurch gekennzeichnet, dass das freie Ende (1a) des Schenkels (1) des U's, in welchem die Zunge (7) ausgeschnitten ist, nach Aussen des U's umgebogen ist.

4. Zusammenbau von Stücken, von welchen wenigstens das eine Stück eine oder mehrere ausmündenden, kerbartigen Aussparungen aufweist, dadurch gekennzeichnet, dass er mit Hilfe einer Mutter oder mehrerer Muttern gemäss einem der Ansprüche 1 bis 3 durchgeführt wird.

**Claims**

1. Clip-shaped nut intended to be mounted on the edge of a panel or the like (P) comprising a notch-shaped open aperture (E) through which may extend a threaded element screwed into the nut and of the type exhibiting the general shape of a U one (1) of the legs of which comprises an opening (4) which may be engaged by the threaded element and the other leg (2) of which comprises a hole (5) leaving the free passage to this threaded element, the said opening (4) and the said hole (5) forming a shank (6) projecting inwards of the U and serving as a means for guiding the nut in the notch (E) of the panel whereas the free end of one leg and/or of the other leg of the U comprises a tongue or the like (7) projecting inwards of the U and located as well as the shank (6) substantially on the central longitudinal axis of the nut so that it thus may cling onto the panel (P) after the passage of the tongue (7) and of the shank (6) into the notch (E) of this panel.

2. Nut according to claim 1, characterized in that the aforesaid opening (4) comprises an impression or the like forming a tapping whereas the aforesaid hole (5) forms a shank (6) and the aforesaid tongue (7) is cut into the free end (1a) of the leg (1) comprising the said opening or impression (4).

3. Nut according to claim 1 or 2, characterized in that the free end (1a) of the leg (1) of the U in which the tongue (7) is cut, is bent outwards of the U.

4. Assembly of parts at least one of which comprises one or several notch-forming open apertures, characterized in that it is carried out by means of one or several nuts according to one of claims 1 to 3.

Fig. 1

Fig. 2